Europäisches Patentamt

European Patent Office

Office européen des brevets

(19)

(11) Publication number: **0 021 696**
**B1**

(12) **EUROPEAN PATENT SPECIFICATION**

(45) Date of publication of patent specification: **22.08.84**

(21) Application number: **80301929.8**

(22) Date of filing: **09.06.80**

(51) Int. Cl.³: **G 01 N 25/32,** G 01 K 7/34 // H01L37/00

(54) **Pyroelectric device.**

(30) Priority: **26.06.79 GB 7922207**
**02.01.80 GB 8000102**

(43) Date of publication of application:
**07.01.81 Bulletin 81/01**

(45) Publication of the grant of the patent:
**22.08.84 Bulletin 84/34**

(84) Designated Contracting States:
**DE FR GB**

(56) References cited:
**DE-B-2 315 007**
**GB-A-1 469 118**
**US-A-3 257 607**
**US-A-3 877 308**
**US-A-4 032 783**

(73) Proprietor: **IMPERIAL CHEMICAL INDUSTRIES PLC**
**Imperial Chemical House Millbank**
**London SW1P 3JF (GB)**

(72) Inventor: **Barlow, William Andrew**
**"Whitegate" New Hey Sandfield Park**
**West Derby Liverpool 12 (GB)**
Inventor: **Place, John David**
**33 Wenlock Road Clough Wood**
**Runcorn Cheshire (GB)**

(74) Representative: **Hartley, Kenneth et al**
**Imperial Chemical Industries Limited Legal Department, Patents Thames House North Millbank**
**London SW1P 4QG (GB)**

## Description

This invention relates to apparatus comprising pyroelectric thermometers, to methods for detecting or monitoring changes in enthalpy which occur when a fluid medium or component thereof contacts a material capable of adsorbing it by passing the fluid medium through the apparatus, and the use of the apparatus.

A pyroelectric thermometer comprises a pyroelectric material, i.e. a material which exhibits a spontaneous polarisation which is a function of temperature. The pyroelectric thermometer further comprises electrodes (such as conductive plates) which are positioned on opposite polar faces of the pyroelectric material, said electrodes being suitably connected to an electronic circuit means for sensing electronic signals.

GB—A—1 469 118 describes a gas dosimeter that detects the presence of a particular reactive gas in the atmosphere. The dosimeter comprises a housing within which is disposed a pyroelectric thermometer. At least one of the conductive plates of the thermometer is coated with a catalyst to cause any of the gas which reaches it to react chemically, the heat of reaction being detected by the thermometer. The housing has a perforated wall guarded by a charcoal filter, so that the atmosphere can diffuse therethrough and reach the catalyst coating.

The present invention provides an apparatus for detecting or monitoring changes in enthalpy which occur when a fluid medium or component thereof contacts a material capable of adsorbing it, the apparatus including a pyroelectric thermometer consisting essentially of a pyroelectric material and electrodes positioned on opposite polar faces thereof with electronic circuit means for sensing electronic signals on said electrodes. The apparatus comprises an enclosed cavity having an inlet and an outlet and containing a permeable mass comprising the adsorbing material in thermal contact with the thermometer, the material being positioned between the inlet and the outlet of the cavity so that all the fluid medium which flows through the cavity from the inlet to the outlet permeates through the permeable mass of adsorbing material.

Preferably the pyroelectric thermometer has a cavity configuration, and more conveniently is of a tubular or bowl like configuration containing within the cavity a mass of catalytic material. Alternatively, the pyroelectric thermometer may comprise a pyroelectric element which is inserted into a mass of catalytic material contained in a vessel of any convenient shape.

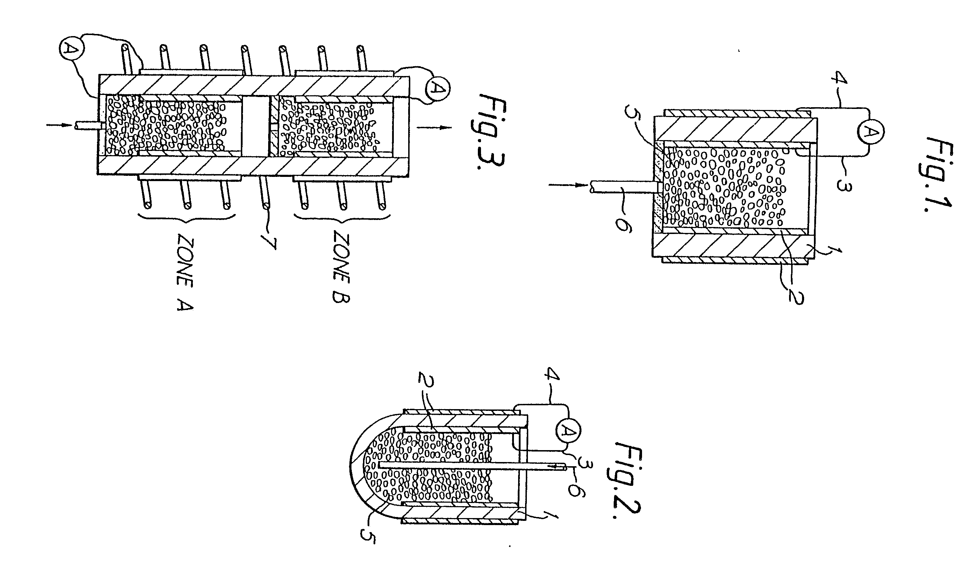

The apparatus of the invention is illustrated diagrammatically in the attached drawings, in which Figure 1 shows in vertical section a tubular device and Figure 2 shows a closed cavity or bowl shaped device according to the invention.

In the drawings the pyroelectric thermometer comprises an insulating layer of pyroelectric material 1 separating electrodes 2 which are connected via wires 3, 4 to means e.g. an ammeter whereby a temperature change affecting polarity of the device may be recognised. The cavity of the device contains a permeable mass 5 of a catalyst and means 6 are provided whereby a material to be examined may be introduced into the cavity and into contact with the catalyst. It will be understood that the drawings are illustrative only and the scope of the invention is not limited thereby.

The device of the invention may vary appreciably in size according to its intended use and consistent with effective operations. Typically, the tubes and bowls are in the range 10—200 mm, for example 25 mm, long and 2—100 mm, for example 15 mm, outside diameter. For example, a sensing device for use in personal monitoring (e.g. for carbon monoxide), which conveniently may be used in conjunction with a small sampling pump, typically comprises a tube of dimensions 10—50 mm length and an outside diameter of 5—20 mm and is capable of handling a flow rate of reactants of, for example, 10—100 ml min$^{-1}$. For "on-line" sensing in a chemical plant or a chimney stack, the device could be much larger, for example up to 200 mm length and an outside diameter of 100 mm, and could be capable of handling flow-rates of, for example, up to 10 litre min$^{-1}$. For laboratory or analytical applications, small sensors for example down to 10 mm length and 2 mm diameter, may be used.

The pyroelectric material for example forming the insulating layer 1, suitably comprises a ceramic material, for example lead zirconate-titanate, barium titanate, strontium-barium niobate, lead niobate or lead tantalate, or a polymer, for example polyvinyl fluoride, polyvinylidene fluoride, polyvinyl chloride, polytetrafluoroethylene, and copolymers thereof. Alternatively the pyroelectric material may comprise a single crystal, for example of lithium tantalate, lithium niobate, antimony sulphoiodide, potassium niobate, lithium germanate, lead germanate, triglycine sulphate, in either the pure or doped form. Conveniently the single crystal of pyroelectric material is inserted into the mass of catalytic material. Single crystal inserts are typically about 1—5 mm square and 0.01 to 1 mm thickness.

The pyroelectric material should be inert with respect to any chemical reactions (as hereinafter described) which may be studied using the pyroelectric device. If desired, the tube or bowl formed of pyroelectric material may be coated with a layer of material which is inert to the reaction conditions. Suitable inert coatings include polymers (e.g. polytetrafluoroethylene) which may be applied to the surface of the pyroelectric material by known techniques, for example vacuum evaporation or spraying. Other inert coatings include silicon monoxide which may be vacuum evaporated on to the surface of the pyroelectric material, and a dielectric material, for example screen printable glass, which conveniently is applied as a paste and subsequently fired.

The electrodes, which are mounted on either side of the pyroelectric material, are preferably parallel to and in face-to-face relationship with one another. The electrodes are comprised of conductive materials and are typically in the form of metallic films, for example metallic films of thickness ranging from 0.01 to 100 $\mu$m. Suitable materials for use as electrodes include the metals gold, silver, platinum, aluminium, and various metal alloys, for example nickel-chromium alloys. Conveniently the metals are deposited on to the surface of the pyroelectric material (for example, the insulating layer 1 as shown in Figures 1 and 2) by known techniques such as thermal evaporation, ion plating, sputtering, and the firing of metal-filled (for example gold or silver) pastes or epoxy resins.

The catalyst is suitably employed in the form of a permeable mass, thereby providing a large surface area. By permeable, we mean that the catalyst is permeable to the passage of a liquid or gaseous stream containing the reactants. Typically, flow rates of liquid or gaseous streams through the catalyst are in the range 0.01 to 10,000 ml min$^{-1}$. The permeable mass of catalyst conveniently, though not essentially, fills the cavity of the pyroelectric device. In use, a material to be examined is introduced into the cavity of the thermometer so that it contacts the catalyst and promotes a chemical reaction under the prevailing conditions, the pyroelectric thermometer detecting any resultant change in temperature of the catalyst mass. To promote rapid, complete and stable reaction it may be necessary to have carefully controlled temperature and other reaction conditions, for example operating at a particular temperature to ensure sufficient catalytic activity (e.g. in excess of 170°C for oxidation of carbon monoxide in the presence of a silver catalyst) or incorporating moderators into the reaction stream to avoid a runaway reaction (e.g. the addition of chlorine to moderate ethylene epoxidation in the presence of silver). In certain environments, it may be necessary to provide a supply of at least one of the reactants, e.g. the use of the device to detect carbon monoxide in a chimney stack may require the addition of oxygen to the gas stream in order to overcome a deficiency of oxygen in the stream.

The catalyst will be selected so as to promote the desired reaction with an appropriate substrate (e.g. gaseous reactants). The catalyst may be of relatively 'wide spectrum' i.e. it may have low specificity, for example, where it is desired to detect the presence of, say, a group of materials, e.g. oxidisable materials, or it may be specific to reaction involving a single compound, or even reaction under specific conditions.

Suitable chemical reactions and catalysts therefor include oxidation of carbon monoxide in the presence of manganese dioxide, silver or platinum; oxidation of ammonia in the presence of platinum; halogenation/dehalogenation reactions using chlorides of copper, zinc or mercury as catalysts; alkylation, isomerisation or polymerisation reactions, for example in the presence of metal chlorides, fluorides, fluoborates supported on silica, alumina, titania or zirconia; hydrogenation/dehydrogenation reactions in the presence of Group I or transition metals, their oxides or sulphides.

Operation at a specific temperature in the presence of various moderators, inhibitors or promoters can increase the activity for a particular reaction over other competing reactions. For example, the oxidation of benzene to maleic anhydride may be performed using vanadium pentoxide as catalyst under conditions of atmospheric pressure and using air rich mixtures. The use of higher pressures (e.g. several atmospheres) and high proportions of benzene gives phenol, hydroquinone and quinone as products. As a further example, the oxidation of ethylene using a silver catalyst can lead to either ethylene oxide or carbon dioxide. Higher selectivities with respect to ethylene oxide may be achieved by operating at about 260°C at a high air/ethylene ratio and in the presence of acetaldehyde or chlorinated ethylenes.

The catalyst may be present in any convenient form and is preferably used in particulate or granular form, although the catalyst could be present as a liquid or gel (which may, for example, be supported by the cavity of the device of the invention).

The size of the particles in the preferred form of the catalyst may vary over a wide range, for example, in the range from 1 to 1000 $\mu$m. Conveniently, the particulate catalyst may be dispersed on a sinter, sponge, foil, gauze or the like of either a metal or a ceramic to provide either a supported catalyst or a self-supporting catalyst.

The catalyst may also comprise a suitably immobilised enzyme or other biologically active molecule or cell which may be used for carrying out or studying reactions with biological substrates or inhibitors. Several methods exist for immobilising enzymes and other biological materials on supports which still leave the materials active. Supports can be, for example, very fine porous glass beads, agarose gels, dextrans, or cellulose. There are several techniques for bonding the enzyme to a support, for example urease may be bonded to thiol activated sepharase (an agarose gel) or silyl amine activated glass. Other techniques involve immobilisation by entrapment in an inert matrix. Immobilised enzymes may be used, for example, to sensitise the device of the invention to concentrations of substrate in solutions or biological fluids. Furthermore, immobilised enzymes may be used to detect inhibitors, such as trace metals, introduced into the substrate stream. Whole biological cells, such as yeast, can be immobilised by similar techniques and used to detect a wider range of substrates or inhibitors.

The material to be examined will usually be a gas but we do not exclude the use of a liquid or a liquid containing material, including liquid containing dissolved or suspended matter. The catalyst may be reactive with the material or any part of it.

The cavity of the thermometer optionally may include means capable of conducting heat to or away from the walls and thereby accelerating or increasing the response of the device to heat evolution or uptake. Conveniently such conducting means may be metallic e.g. metal fibres, foil or gauze. For example, the thermal conductivity of the catalyst bed, in particular non-metallic powders, is in general low which has an adverse effect on the response time of the sensor. The inclusion of a high thermal conductivity (generally metal) frame or support will improve heat transfer from the catalyst bed to the sensor walls. Powder catalysts conveniently may be supported in a fine metallic (e.g. stainless steel) mesh or gauze which can be rolled into a cylindrical plug and inserted in the thermometer cavity. Certain catalysts can be deposited on to an alumina coated metal foil (e.g. aluminium) and again a plug may be formed for insertion into the thermometer cavity. Alternatively, high thermal conductivity materials (e.g. metal fibres) may be distributed throughout the catalyst bed. Any of these means may be used to improve the thermal conductivity of the catalyst bed and hence the response time of the sensor. It will be apparent that the device of the invention has wide applicability.

It may, for example, be used to detect gases and monitor gas compositions. In its simplest form, the device comprises a pyroelectric thermometer tube packed with a catalyst, and the presence of certain gaseous species in the environment are detected by the heat liberated during their combustion in the device. Such a device may be used to detect a wide range of gases. The use of certain catalysts operating at particular temperatures can give a reasonable degree of specificity e.g. operation at only moderate temperatures with certain metal oxide catalysts provides a reasonably specific carbon monoxide sensor. This may be used in conjunction with a mini-pump to form a personal carbon monoxide dosimeter. Typically this comprises a pyroelectric ceramic (e.g. lead zirconate-titanate) tube of small dimensions e.g. length 24 mm, outside diameter 8—9 mm, inside diameter 5 mm. The catalyst is suitably a highly active oxidation catalyst such as a mixed metal oxide, e.g. a mixture of manganese dioxide and copper oxide, operating at 150°C. The system conveniently incorporates a small pump to draw the atmosphere to be analysed first through pretreatment filters to remove water vapour and hydrocarbons and then through the sensor (and preferably through a reference tube in series with the sensor tube and packed with support particles free of catalyst). Conveniently, the sensor system is connected to an amplifier/integrator unit which measures the signals corresponding to the temperature rise of the catalyst and provides a continuous read-out of the concentration (and time weighted average concentration) of carbon monoxide and/or activates an alarm system when the carbon monoxide concentration exceeds a preset limit.

The device of the invention may be used to monitor the level of carbon monoxide in furnace flues and chimney stacks, thereby, indicating the state of the combustion process, and/or to monitor the level of various pollutants e.g. sulphur dioxide, nitrogen oxides. The monitoring device suitably consists of a large diameter pyroelectric tube which is placed in the gas flow. The pyroelectric material e.g. lead metaniobate, is selected to withstand the temperature (e.g. 400°C) of the gases being monitored. The catalyst mass is suitably of an open structure so as to permit easy passage of the gases and is sufficiently wide ranging to promote the desired reactions of the gases to be detected.

The use of a broad ranging catalyst e.g. platinum in a device of the invention conveniently may be used to determine the calorific value of gases, e.g. waste fuel gases, which may have to be recycled if there is incomplete combustion. The device may be used as a simple monitor or in a feed back loop in which at least part of the exhaust gases are recycled to control the fuel gas combustion. In general, the device may be used to monitor and control all types of reactor processes by being placed directly in the process product pipeline.

The device of the invention may be used to test the efficiency of catalysts. A rapid catalyst testing device is suitably in the form of a bowl type pyroelectric thermometer which is quickly and easily loaded with a sample of catalyst. After loading, a standard gas mixture containing reactants is passed through the catalyst bed with the resultant temperature rise and pyroelectric response-calibrated in terms of catalyst activity. Thus samples representative of a batch of catalyst may be quickly and easily tested for activity.

The pyroelectric thermometer may be used to supplement conventional microreactor or temperature programmed desorption (TDP) experiments in the study of reaction kinetics. In a microreactor or TPD experiment a sample of catalyst is placed in a tube through which the reactants are passed. The use of a tube of pyroelectric material in combination with a catalyst, as in the device of our invention, and observation of the temperature changes during the adsorption/reaction/desorption experiments provides useful information on reaction kinetics in addition to that currently obtained.

This mode of operation may also be used as the basis of a gas sensing device involving the detection of certain gases with well characterised adsorption/desorption characteristics on particular surfaces at definite temperatures in a temperature programmed desorption mode.

Thus the temperature of the device may be raised rapidly, for example 20°C to 500°C in a few minutes, thereby leading to the desorption of the species to be detected at a characteristic temperature. The quantity of gas is determined from the total heat of desorption observed as an arrest in the temperature rise. The cycle of rapid desorption and a short adsorption/cooling period is repeated continuously. This type of sensor is preferably small to minimise its thermal mass and thereby ensure a reasonably short cycle time. The concentration of species to be detected is not observed continuously but obtained at intervals of one cycle.

A device of the invention may be used as a detector at the end of either a gas chromatograph (GC) column or a high pressure liquid chromatograph (HPLC) column. The pyroelectric thermometer comprising the device is conveniently packed with a general adsorbent material (e.g. silica gel) on which all compound species leaving the column adsorb and subsequently desorb. The temperature charges arising from the adsorption and desorption processes are detected by the pyroelectric thermometer. The signal obtained is integrated to give a peak of height proportional to the concentrations of the component. Thus as each component passes out of the column and through the detector a peak is recorded.

The pyroelectric thermometer described herein may be used as general purpose microcalorimeters. Enthalpy changes of any kind (e.g. due to phase transitions) may be studied by placing the materials inside the cavity of a pyroelectric thermometer.

Detectors based on biological reactions may be used for on line monitoring of biochemical plant, metabolite and drug levels *ex vivo*, analysis of biological materials e.g. amino acids, and for the measurement of pollutant levels by their effects on biological systems. They may also be used to study enzyme reactions.

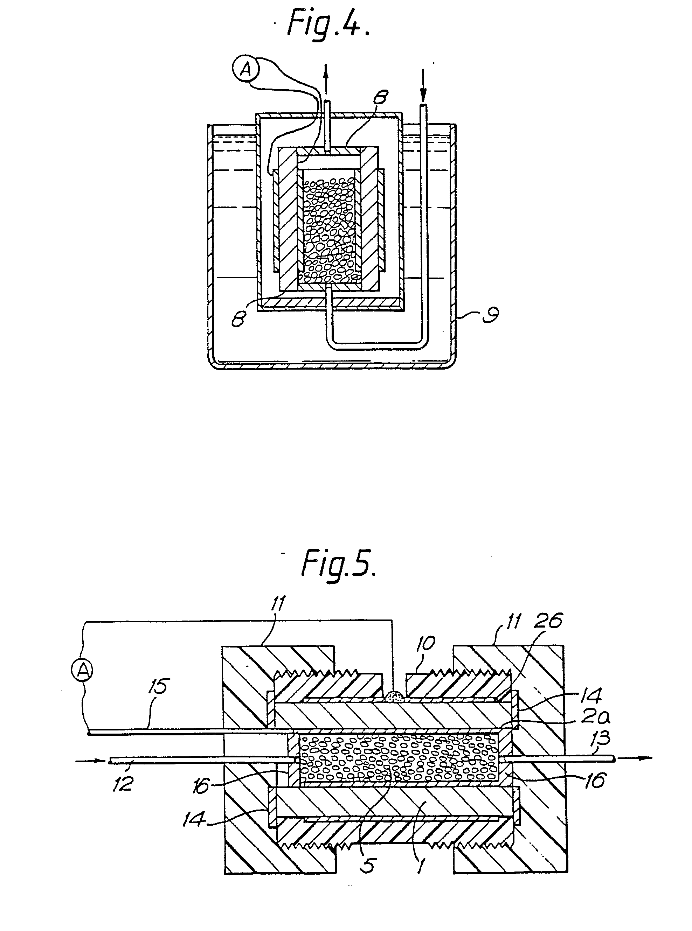

The invention is further illustrated by the following Examples, in which reference is made to Figures 3 and 4. Figure 3 illustrates in vertical section a device including a fairly non-specific oxidation catalyst, and showing the presence of reference component (i.e. support particles which are free of catalyst) positioned upstream of the catalyst. It will be appreciated that the reference component may be positioned either upstream or downstream of the catalyst component, or in some cases, it may be advantageous to have a sensor which is provided with two reference components, one upstream and one downstream of the catalyst component, so that the sensor is referenced by the average response of the two reference components. In addition to the aforesaid arrangements, wherein the catalyst component (sensor) and the reference component are positioned in series relative to one another, the gas flow may be split into two or more parallel streams and the catalyst component (sensor) and reference component(s) located in the separate gas flows. Figure 4 shows a device including a very specific catalyst (an enzyme) capable of catalysing a single biological reaction involving a particular substrate.

### Example 1

The device as shown in Figure 3 was a tubular pyroelectric thermometer fabricated of lead titanate-zirconate ceramic with electrodes applied using a paste comprising silver oxide, metallic silver and glass flux suspended in an organic medium (e.g. polyamide); the paste was fired at 500°C to give a conducting silver electrode provided with two identical zones — Zone A which was packed with support particles free of catalyst, and zone B packed with a catalyst consisting of alumina support particles coated with silver. ($\alpha$-alumina particles 400—1000 $\mu$m diameter; catalyst coating zone B — 10 nm thick Ag.) Each zone was provided with its own electrodes and a readout comprising an electrometer amplifier reading the short circuit current between the electrodes. The difference between the two amplifier outputs is a signal proportional to the heat evolved in the catalyst zone B. The signal is therefore proportional to the concentration of reactants passing through the device and is unaffected by changes in ambient temperature. Alternatively, the electrodes of zones A and B can be interconnected with opposite polarity and a single electrometer used to amplify the net output signal generated by a temperature change in zone B. Changes in ambient temperature are nullified as the two zones are connected in opposition and only an out of balance signal will be observed.

A gas mixture containing carbon monoxide was fed as shown. The gas passed first through the inert support particle filled zone A and then through catalyst filled zone B. The device was heated to 200°C by a heating coil 7 and maintained at this temperature to ensure that the oxidation of carbon monoxide that might be present will proceed at a reasonable rate. The presence of carbon monoxide in the gas fed into the device was indicated by a rise in temperature of the catalytic zone.

The temperature rise is observed directly by the electrometer amplifier. A typical sensor response to a sample of 1% carbon monoxide in a stream of air is typically 1 nano-ampere ($1 \times 10^{-9}$ Amperes). The response is linearly dependent on sample concentration. Present day electrometers amplifiers can measure currents as small as $1 \times 10^{-14}$ Amperes. It is therefore evident that the detection limit of the sensing device in its simplest form will be less than 1 part per million carbon monoxide in air.

It will be appreciated that a wide range of gases may be detected using different catalysts and different operating temperatures, for example in the range 20 to 500°C.

## Example 2

The device was set up as shown. The insulator 1 was a tubular ceramic of lead zirconate titanate composition 24 mm long, 8.6 mm internal diameter and wall thickness 1.5 mm. Silver electrodes 2 were employed and contact with the electrodes was by heat cured gold/epoxy resin. The short circuit current was measured using an electrometer and chart recorder.

The catalyst was urease immobilised on Sepharose. The tube was packed with the catalyst and the apparatus equilibrated with phosphate buffered saline at pH 7.0. At intervals pulses of approximately 1.0 ml of 0.5 M urea solution in phosphate buffered saline were admitted to the flow.

A response peak was observed within 2 minutes of introducing the urea to the catalyst.

In the apparatus the catalyst was retained in the tube by a photopolymerised polymeric plug 8, and the device was held in a water bath 9.

## Example 3

A device was set up as shown in Example 1 wherein the catalyst was a hopcalite i.e. a mixed oxide catalyst consisting of copper and manganese oxides. This is a preferred embodiment for carbon monoxide detection as the catalyst is of high activity at a low temperature. If suitable precautions (e.g. silica gel or molecular sieve absorbent) are taken to remove water vapour from the gas stream the detector can operate at the ambient atmospheric temperature (e.g. −10 to 30°C) without heating. However, increased activity and sensitivity are obtained at a temperature of 150°C and at this temperature no precautions need be taken for water vapour removal as the catalyst is then moisture insensitive. The response of this device has been found to be linear over the carbon monoxide concentration range 5—50,000 parts per million. It will be appreciated that slight modifications to the sensor design leading to a reduced thermal mass and greater electronic current sensitivity will lead to a detection limit well below 1 part per million.

## Example 4

A device was set up as in Example 1 using a catalyst consisting of alumina support particles coated with silver, and the device was operated at a temperature of 250 to 300°C for the detection of ethylene. At an elevated temperature (viz. 250—300°C instead of 200°C) the activity for ethylene oxidation is greater than for carbon monoxide oxidation. Also the fact that the heat evolved during the complete combustion of ethylene (315 Kcal/mole) is much greater than that evolved during the oxidation of carbon monoxide (60 Kcal/mole) leads to a much greater sensitivity of the device to ethylene at these elevated temperatures. A detection limit of 10 ppm can be achieved but a more useful working range is 1—100% of the Lower Explosive Limit (LEL) which is 2.7% by volume for ethylene (i.e. 270—22,000 ppm).

## Example 5

The device was set up as shown in Figure 5. The insulator of pyroelectric material 1 was a tubular ceramic of lead zirconate-titanate composition 24 mm long, 8.6 mm external diameter and 1.5 mm wall thickness. The tube was placed in a housing consisting of a PTFE collar 10 with PTFE end caps 11 carrying an inlet pipe 12, an outlet pipe 13, and sealing rings 14. Electrical contact was made to the inner electrode 2a via the stainless steel sheathing of a thermocouple 15 located in one end cap and by a copper wire bonded to the outer electrode 2b directly with a heat cured silver/epoxy resin. The electronic detection circuit comprised an electrometer amplifier and a chart recorder. The catalyst was urease immobilised on sophorose. The tube was packed with catalysts and a constant flow of phosphate buffered saline at pH 7.0 passed through the system. The catalyst was retained in the tube by fillers 16. At intervals samples of approximately 0.2 ml of urea solution in phosphate buffered saline were admitted to the flow. An electrical response peak was observed as the urea passed through the sensor. The magnitude of the response peak was found to be a linear function of the molar concentration of urea in the range 0.001 M to 1 M solution. The temperature of all solutions was held constant in a thermostatted water bath (not shown).

## Claims

1. An apparatus for detecting or monitoring changes in enthalpy which occur when a fluid medium or component thereof contacts a material capable of adsorbing it, the apparatus including a pyroelectric thermometer consisting essentially of a pyroelectric material and electrodes positioned on opposite polar faces thereof with electronic circuit means for sensing electronic signals on said electrodes, characterised in that the apparatus comprises an enclosed cavity having an inlet and an outlet and containing a permeable mass comprising the adsorbing material in thermal contact with the thermometer, the material being positioned between the inlet and the outlet of the cavity so that all the fluid medium which flows through the cavity from the inlet to the outlet permeates through the permeable mass of adsorbing material.

2. An apparatus according to claim 1 which is provided with means for heating or cooling the apparatus so as to vary its temperature and means for detecting changes in the rate of such temperature variations thereby to detect desorption or adsorption by the adsorbing material.

3. An apparatus as claimed in claim 1, wherein the adsorbing material is a catalyst on which the fluid medium or components thereof react chemically.

4. An apparatus as claimed in claim 3 wherein the permeable mass consists essentially of the catalyst supported on a permeable substrate.

5. An apparatus as claimed in claim 4 wherein the catalyst comprises an immobilised enzyme or other biologically active molecule or cell.

6. An apparatus as claimed in any one of the preceding claims, having in addition a reference pyroelectric thermometer which is mounted to be in thermal contact with the fluid medium when the latter flows through the apparatus but which is not in thermal contact with the adsorbing material, and means for comparing electronic signals on the electrodes of the reference thermometer with electronic signals of the electrodes of the other thermometer, thereby to compensate for any changes in the temperature of the fluid medium due to causes other than the enthalpy changes arising from contact of the fluid medium with the adsorbing material.

7. An apparatus as claimed in any one of the preceding claims in which the pyroelectric material has a tube or bowl configuration providing cavity-defining walls which at least partly enclose the cavity.

8. An apparatus as claimed in claim 7 wherein the tube or bowl formed of pyroelectric material is coated with a layer of material which is inert to the reaction conditions.

9. An apparatus as claimed in any one of the preceding claims wherein the pyroelectric material comprises a ceramic material selected from lead zirconate-titanate, barium titanate, strontium-barium niobate, lead niobate or lead tantalate, or a polymer, selected from polyvinyl fluoride, polyvinylidene fluoride, polyvinyl chloride, polytetrafluoroethylene, and copolymers thereof.

10. An apparatus as claimed in any one of the preceding claims wherein the pyroelectric material comprises a single crystal inserted into the mass of adsorbing material and wherein the single crystal is of a material selected from lithium tantalate, lithium niobate, antimony sulphoiodide, potassium niobate, lithium germanate, lead germanate, triglycine sulphate, in either pure or doped form.

11. A method for detecting or monitoring heat of adsorption of a component of a fluid medium, which comprises passing the fluid medium through an apparatus as claimed in claim 1 at a temperature at which said component is adsorbable onto the surface of the permeable material, and sensing the electronic signals on the electrodes.

12. A method for detecting the temperature of adsorption or desorption of a component of a fluid medium, comprising introducing the fluid medium into an apparatus as claimed in claim 2 and heating or cooling the apparatus to vary its temperature while sensing the rate of change of the electronic signals on the electrodes.

13. A method for detecting or monitoring a catalytic reaction in a fluid medium, which comprises passing the fluid medium through an apparatus as claimed in any one of claims 3 to 10 and sensing the electronic signals on the electrodes.

14. The use of apparatus as claimed in claim 1 for detecting or monitoring heat of adsorption of a component of a fluid medium by passing the fluid medium through the apparatus at a temperature at which said component is adsorbable onto the surface of the permeable material, and sensing the electronic signals on the electrodes.

15. The use of apparatus as claimed in claim 2 for detecting the temperature of adsorption or desorption of a component of a fluid medium by introducing the fluid medium into the apparatus and sensing the rate of change of the electronic signals on the electrodes while heating or cooling the apparatus through the said temperature.

16. The use of apparatus as claimed in any one of claims 3 to 5 for detecting or monitoring a component of a fluid by causing the component to react chemically on the catalyst.

**Patentansprüche**

1. Vorrichtung zum Feststellen oder Überwachen von Enthalpieänderungen, die auftreten, wenn ein Fluid oder ein Bestandteil davon mit einem Adsorptionsmittel, das dazu befähigt ist, das Fluid oder den Bestandteil des Fluids zu adsorbieren, in Kontakt kommt, wobei die Vorrichtung ein pyroelektrisches Thermometer enthält, das im wesentlichen aus einem pyroelektrischen Material und auf entgegengesetzten polaren Flächen des pyroelektrischen Materials angeordneten Elektroden mit einer elektronischen Schaltungseinrichtung zum Erfassen elektronischer Signale, die an den Elektroden auftreten, besteht, dadurch gekennzeichnet, daß die Vorrichtung einen umschlossenen Hohlraum enthält, der einen Einlaß und einen Auslaß aufweist und eine durchlässige Masse enthält, die aus dem Adsorptionsmittel besteht und mit dem Thermometer in Thermokontakt ist, wobei das Adsorptionsmittel zwischen dem Einlaß und dem Auslaß des Hohlraums angeordnet ist, so daß das gesamte Fluid, das vom Einlaß zum Auslaß durch den Hohlraum hindurchströmt, durch die aus dem Adsorptionsmittel bestehende, durchlässige Masse hindurchdringt.

2. Vorrichtung nach Anspruch 1, die mit einer Einrichtung zum Erwärmen oder Kühlen der Vorrichtung, um ihre Temperatur zu ändern, und mit einer Einrichtung zum Feststellen von Änderungen der Geschwindigkeit solcher Temperaturänderungen ausgestattet ist, um dadurch eine Desorption von dem Adsorptionsmittel oder eine Adsorption an das Adsorptionsmittel festzustellen.

3. Vorrichtung nach Anspruch 1, bei der das Adsorptionsmittel ein Katalysator ist, auf dem das Fluid oder Bestandteile davon chemisch reagieren.

4. Vorrichtung nach Anspruch 3, bei der die durchlässige Masse im wesentlichen aus dem Katalysator besteht, der auf einem durchlässigen Trägermaterial getragen wird.

5. Vorrichtung nach Anspruch 4, bei der der Katalysator ein immobilisiertes Enzym oder andere biologisch aktive Moleküle oder Zellen enthält.

6. Vorrichtung nach einem der vorhergehenden Ansprüche, die außerdem ein pyroelektrisches Vergleichsthermometer, das so eingebaut ist, daß es mit dem Fluid in Thermokontakt ist, wenn das Fluid durch die Vorrichtung hindurchströmt, jedoch mit dem Adsorptionsmittel nicht in Thermokontakt ist, und eine Einrichtung zum Vergleichen von elektronischen Signalen, die an den Elektroden des Vergleichsthermometers auftreten, mit elektronischen Signalen der Elektroden des anderen Thermometers aufweist, um dadurch alle Änderungen der Temperatur des Fluids zu kompensieren, die anderen Ursachen als den Enthalpieänderungen, die von einem Kontakt des Fluids mit dem Adsorptionsmittel herrühren, zuzuschreiben sind.

7. Vorrichtung nach einem der vorhergehenden Ansprüche, bei der das pyroelektrische Material eine rohr- oder becherförmige Gestalt hat, durch die einen Hohlraum abgrenzende Wände bereitgestellt werden, die den Hohlraum mindestens teilweise umschließen.

8. Vorrichtung nach Anspruch 7, bei der das Rohr oder der Becher, der aus pyroelektrischem Material gebildet ist, mit einer Schicht aus einem gegenüber den Reaktionsbedingungen inerten Material beschichtet ist.

9. Vorrichtung nach einem der vorhergehenden Ansprüche, bei der das pyroelektrische Material aus einem keramischen Material, das aus Bleizirkonattitanat, Bariumtitanat, Strontiumbariumniobat, Bleiniobat oder Bleitantalat ausgewählt ist, oder aus einem Polymer, das aus Polyvinylfluorid, Polyvinylidenfluorid, Polyvinylchlorid, Polytetrafluorethylen und Copolymeren davon ausgewählt ist, besteht.

10. Vorrichtung nach einem der vorhergehenden Ansprüche, bei der das pyroelektrische Material aus einem Einkristall besteht, der in die aus dem Adsorptionsmittel bestehende Masse eingesetzt ist, wobei der Einkristall aus einem Material besteht, das aus Lithiumtantalat, Lithiumniobat, Antimonsulfidjodid, Kaliumniobat, Lithiumgermanat, Bleigermanat und Triglycinsulfat entweder in reiner oder in dotierter Form ausgewählt ist.

11. Verfahren zum Feststellen oder Überwachen der Adsorptionswärme eines Bestandteils eines Fluids, bei dem das Fluid durch eine Vorrichtung nach Anspruch 1 bei einer Temperatur, bei der dieser Bestandteil an die Oberfläche des durchlässigen Adsorptionsmittels adsorbierbar ist, hindurchgeleitet wird und die an den Elektroden auftretenden elektronischen Signale erfaßt werden.

12. Verfahren zum Feststellen der Adsorptions- oder Desorptionstemperatur eines Bestandteils eines Fluids, bei dem das Fluid in eine Vorrichtung nach Anspruch 2 eingeleitet und die Vorrichtung zur Änderungen ihrer Temperatur erwärmt oder gekühlt wird, während die Geschwindigkeit der Änderung der an den Elektroden auftretenden elektronischen Signale erfaßt wird.

13. Verfahren zum Feststellen oder Überwachen einer katalytischen Reaktion in einem Fluid, bei dem das Fluid durch eine Vorrichtung nach einem der Ansprüche 3 bis 10 hindurchgeleitet wird und die an den Elektroden auftretenden elektronischen Signale erfaßt werden.

14. Anwendung der Vorrichtung nach Anspruch 1 zum Feststellen oder Überwachen der Adsorptionswärme eines Bestandteils eines Fluids, indem das Fluid bei einer Temperatur, bei der dieser Bestandteil an die Oberfläche des durchlässigen Adsorptionsmittels adsorbierbar ist, durch die Vorrichtung hindurchgeleitet wird und die an den Elektroden auftretenden elektronischen Signale erfaßt werden.

15. Anwendung der Vorrichtung nach Anspruch 2 zum Feststellen der Adsorptions- oder Desorptionstemperatur eines Bestandteils eines Fluids, indem das Fluid in die Vorrichtung eingeleitet und die Geschwindigkeit der Änderung der an den Elektroden auftretenden elektronischen Signale erfaßt wird, während die Vorrichtung unter Überstreichung der Adsorptions- oder Desorptionstemperatur erwärmt oder gekühlt wird.

16. Anwendung der Vorrichtung nach einem der Ansprüche 3 bis 5 zum Feststellen oder Überwachen eines Bestandteils eines Fluids, indem veranlaßt wird, daß der Bestandteil auf dem Katalysator chemisch reagiert.

## Revendications

1. Appareil pour détecter ou contrôler des variations d'enthalpie qui se produisent lorsqu'un milieu fluide ou un constituant de ce milieu est en contact avec une matière capable de l'adsorber, l'appareil comprenant un thermomètre pyro-électrique constitué essentiellement d'une matière pyro-électrique et d'électrodes positionnées sur des faces polaires opposées de cette matière, un circuit électronique étant destiné à détecter des signaux électroniques sur lesdites électrodes, caractérisé en ce que l'appareil présente une cavité fermée ayant une entrée et une sortie et contenant une masse perméable constituant la matière adsorbante en contact thermique avec le thermomètre, la matière étant positionnée entre l'entrée et la sortie de la cavité de manière que la totalité du milieu fluide qui s'écoule à travers la cavité, de l'entrée vers la sortie, passe par perméation à travers la masse perméable de matière adsorbante.

2. Appareil selon la revendication 1, qui est équipé de moyens destinés à chauffer ou refroidir l'appareil afin de faire varier sa température, et de moyens destinés à détecter des changements du rythme de ces variations de température afin de détecter une désorption ou une adsorption par la matière adsorbante.

3. Appareil selon la revendication 1, dans lequel la matière adsorbante est un catalyseur sur lequel le milieu fluide ou des constituants de ce milieu réagissent chimiquement.

4. Appareil selon la revendication 3, dans lequel la masse perméable est constituée essentiellement par le catalyseur supporté par un substrat perméable.

5. Appareil selon la revendication 4, dans lequel le catalyseur comprend un enzyme immobilisé ou autre molécule ou cellule biologiquement active.

6. Appareil selon l'une quelconque des revendications précédentes, comportant en outre un thermomètre pyro-électrique de référence qui est monté de manière à être en contact thermique avec le milieu fluide lorsque ce dernier s'écoule à travers l'appareil, mais qui n'est pas en contact thermique avec la matière adsorbante, et les moyens destinés à comparer des signaux électroniques sur les électrodes du thermomètre de référence à des signaux électroniques des électrodes de l'autre thermomètre, afin de compenser tous changements de la température du milieu fluide dus à des causes autres que les changements d'enthalpie résultant d'un contact du milieu fluide avec la matière adsorbante.

7. Appareil selon l'une quelconque des revendications précédentes, dans lequel la matière pyroélectrique possède une configuration en tube ou en cuvette comprenant des parois définissant une cavité, qui renferment au moins partiellement la cavité.

8. Appareil selon la revendication 7, dans lequel le tube ou la cuvette formé de matière pyro-électrique est revêtu d'une couche de matière qui est inerte aux conditions de réaction.

9. Appareil selon l'une quelconque des revendications précédentes, dans lequel la matière pyro-électrique comprend une matière céramique choisie parmi le zirconate-titanate de plomb, le titanate de baryum, le niobate de strontium-baryum, le niobate de plomb ou le tantalate de plomb, ou un polymère choisi parmi le polyfluorure de vinyle, le polyfluorure de vinylidène, le polychlorure de vinyle, le polytétrafluoréthylène, et des copolymères de ces matières.

10. Appareil selon l'une quelconque des revendications précédentes dans lequel la matière pyro-électrique comprend un monocristal inséré dans la masse de matière adsorbante et dans lequel le monocristal est une matière choisie parmi le tantalate de lithium, le niobate de lithium, le sulfo-iodure d'antimoine, le niobate de potassium, le germanate de lithium, le germanate de plomb, le triglycine-sulfate, sous forme pure ou dopée.

11. Procédé pour détecter ou contrôler la chaleur d'adsorption d'un constituant d'un milieu fluide, qui consiste à faire passer le milieu fluide à travers un appareil tel que revendiqué dans la revendication 1, à une température à laquelle ledit constituant peut être adsorbé sur la surface de la matière perméable, et à détecter les signaux électroniques sur les électrodes.

12. Procédé pour détecter la température d'adsorption ou de désorption d'un constituant du milieu fluide, consistant à introduire le milieu fluide dans un appareil tel que revendiqué dans la revendication 2 et à chauffer ou refroidir l'appareil pour faire varier sa température en même temps que le rythme de variation des signaux électroniques sur les électrodes est capté.

13. Procédé pour détecter ou contrôler une réaction catalytique dans un milieu fluide, qui consiste à faire passer le milieu fluide à travers un appareil tel que revendiqué dans l'une quelconque des revendications 3 à 10, et à capter les signaux électroniques sur l'électrode.

14. Utilisation de l'appareil selon la revendication 1, pour la détection ou le contrôle de la chaleur d'adsorption d'un constituant d'un milieu fluide par passage du milieu fluide à travers l'appareil à une température à laquelle ledit constituant peut être adsorbé sur la surface de la matière perméable, et captage des signaux électroniques sur les électrodes.

15. Utilisation de l'appareil selon la revendication 2 pour la détection de la température d'adsorption ou de désorption d'un constituant d'un milieu fluide par l'introduction du milieu fluide dans l'appareil et captage du rythme de variation des signaux électroniques sur les électrodes, en même temps que l'appareil est chauffé ou refroidi à ladite température.

16. Utilisation de l'appareil selon l'une quelconque des revendications 3 à 5 pour la détection ou le contrôle d'un constituant d'un fluide, par mise en réaction chimique du constituant sur le catalyseur.

0 021 696

Fig.1.

Fig.2.

Fig.3.

ZONE B

7

ZONE A

1

## Fig.4.

## Fig.5.